Europäisches Patentamt

European Patent Office

Office européen des brevets

(11) Numéro de publication : **0 509 871 A1**

# DEMANDE DE BREVET EUROPEEN

(21) Numéro de dépôt : **92400899.8**

(22) Date de dépôt : **31.03.92**

(51) Int. Cl.⁵ : **F25J 3/04, C01B 23/00**

(30) Priorité : **16.04.91 FR 9104623**

(43) Date de publication de la demande :
**21.10.92 Bulletin 92/43**

(84) Etats contractants désignés :
**BE DE ES FR GB IT NL SE**

(71) Demandeur : **L'AIR LIQUIDE, SOCIETE
ANONYME POUR L'ETUDE ET
L'EXPLOITATION DES PROCEDES GEORGES
CLAUDE
75, Quai d'Orsay
F-75321 Paris Cédex 07 (FR)**

(72) Inventeur : **Mollaret, Bertrand
4 Chemin de la Dhuy
F-38240 Meylan (FR)**
Inventeur : **Saulnier, Bernard
25 rue René Léger
F-92700 Colombes (FR)**

(74) Mandataire : **Le Moenner, Gabriel et al
L'AIR LIQUIDE, Société Anonyme pour l'étude
et l'exploitation des procédés Georges Claude
75, Quai d'Orsay
F-75321 Paris Cédex 07 (FR)**

(54) **Procédé et installation de production d'argon.**

(57) Dans ce procédé opérant par distillation d'air dans une double colonne (1) couplée à une colonne (2) de production par distillation d'argon impur, élimination de l'oxygène contenu dans l'argon impur par conversion catalytique (en 18), élimination par adsorption du produit de cette conversion (en 19), puis élimination par distillation (en 4) de l'azote du gaz restant, on produit par distillation (en 2) de l'argon impur ayant une teneur en oxygène inférieure à 1000 vpm environ, et la conversion catalytique est réalisée en faisant passer l'argon impur et de l'hydrogène en excès, au voisinage de la température ambiante, dans un lit catalytique (18) constitué de particules d'au moins un métal de la famille du platine supportées par un support particulier à forte surface spécifique.

EP 0 509 871 A1

La présente invention est relative à un procédé de production d'argon impur par distillation d'air dans une double colonne couplée à une colonne de production d'argon impur, élimination, par conversion catalytique en présence d'un agent réducteur en excès, de l'oxygène contenu dans l'argon impur, élimination par adsorption du produit de cette conversion puis élimination par distillation de l'excès d'agent réducteur et de l'azote du gaz restant.

Dans les procédés connus de ce type, l'argon impur, ayant une composition d'environ 95 % d'argon, 3 % d'azote et 2 % d'oxygène, est épuré en oxygène à une température élevée dans un appareil dit "DEOXO". Dans cette technique, la température de réaction doit être contrôlée au voisinage de 450°C, pour éviter toute formation de méthane par réaction de particules de carbone avec l'hydrogène à température inférieure, et les risques consécutifs d'explosion et de pollution de l'argon. De plus, il faut refroidir le gaz issu du DEOXO, d'abord jusqu'à 50 à 80°C, au moyen d'un réfrigérant à eau, pour pouvoir procéder à sa dessiccation sur alumine. L'installation est donc relativement compliquée.

Pour éviter ces inconvénients, il a été proposé, dans le document EP-A-377.117, d'éliminer totalement l'oxygène dans la colonne de production d'argon impur. Ceci est également coûteux, car il faut disposer d'une colonne d'au moins 150 plateaux théoriques, et donc de grande taille, qu'il faut implanter au niveau du sol et équiper d'une pompe de remontée du liquide de cuve dans la colonne basse pression de la double colonne.

L'invention a pour but de fournir un procédé fiable et efficace, de coûts d'équipement et d'utilisation réduits et qui, au moins dans certaines applications, évite de manière particulièrement économique les inconvénients liés au DEOXO.

A cet effet, le procédé suivant l'invention est caractérisé en ce qu'on produit par distillation de l'argon impur ayant une faible teneur en oxygène, inférieure à 1000 vpm, typiquement comprise entre 100 et 1000 vpm environ, et en ce que la conversion catalytique est réalisée en faisant passer l'argon impur et l'agent réducteur en excès, au voisinage de la température ambiante, dans un lit catalytique constitué de particules d'au moins un métal de la famille du platine supportées par un support particulier à forte surface spécifique.

Suivant d'autres caractéristiques :
- le support particulier est une zéolithe et/ou de l'alumine et/ou de la silice ;
- on régénère le catalyseur au moyen d'une montée en température et/ou d'un abaissement de pression, le cas échéant en dessous de la pression atmosphérique, et/ou d'un balayage d'élution par le gaz à épurer ou par un gaz provenant de la colonne de distillation, notamment de l'azote de production de la double colonne ;

- l'agent de conversion catalytique est l'hydrogène ou le monoxyde de carbone.

L'invention a également pour objet une installation de production d'argon destinée à la mise en oeuvre d'un tel procédé. Cette installation, du type comprenant une double colonne de distillation d'air couplée à une colonne de production d'argon impur par distillation, un compresseur d'argon impur refoulant dans un appareil de conversion catalytique de l'oxygène, des moyens d'élimination des produits de la conversion, et une colonne de déazotation, est caractérisée en ce que la colonne de production d'argon impur comporte entre au moins 80, typiquement entre 80 et 110 plateaux théoriques environ, et en ce que l'appareil de conversion catalytique comprend un lit catalytique constitué de particules d'au moins un métal de la famille du platine supportées par un support particulier à forte surface spécifique et fonctionne au voisinage de la température ambiante.

Suivant d'autres caractéristiques :
- le support particulier est une zéolithe et/ou de l'alumine et/ou de la silice ;
- l'installation comprend un échangeur de chaleur mettant en relation d'échange thermique à contre-courant l'argon impur provenant de la colonne de production d'argon impur et le gaz issu desdits moyens d'élimination ;
- l'entrée de l'appareil de conversion catalytique est reliée à une source d'hydrogène ou de monoxyde de carbone en excès ;
- l'installation comprend au moins un lit catalytique et un lit d'adsorbant constituant lesdits moyens d'élimination, disposés en superposition dans au moins un même conteneur.

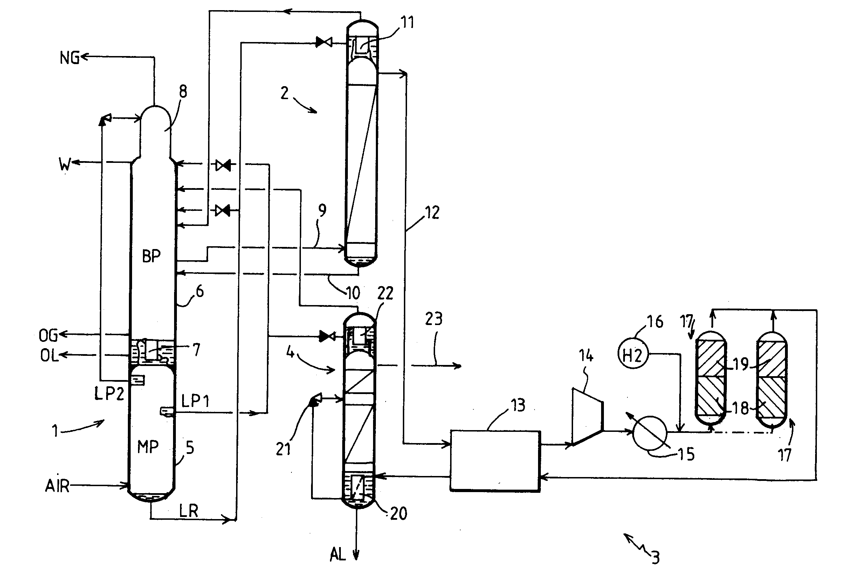

Un exemple de mise en oeuvre de l'invention va maintenant être décrit en regard du dessin annexé, dont la figure unique représente schématiquement une installation de production d'argon conforme à l'invention.

Les pressions dont il est question dans le présent mémoire sont des pressions absolues.

On a représenté sur le dessin une installation de distillation d'air destinée à produire en basse pression, c'est-à-dire au voisinage de la pression atmosphérique, de l'oxygène gazeux OG, de l'oxygène liquide OL, de l'azote gazeux NG et, à une pression de l'ordre de $1,8 \times 10^5$ Pa, de l'argon liquide AL. Cette installation comporte, de façon classique, une double colonne de distillation 1 du type dit "à minaret", une colonne 2 de production d'argon impur, un appareil 3 d'élimination de l'oxygène de l'argon impur, et une colonne 4 de déazotation.

Hormis le nombre de plateaux théoriques de la colonne 2, les équipements 1, 2 et 4 de distillation sont classiques et ne seront décrits que brièvement.

La double colonne 1 comprend une colonne moyenne pression 5 fonctionnant par exemple sous environ $6 \times 10^5$ Pa, surmontée d'une colonne basse pression 6, fonctionnant par exemple un peu au-dessus de la pression atmosphérique. L'air à traiter est introduit à la base de la colonne 5, et la vapeur de tête (azote) de cette dernière est mise en relation d'échange thermique avec le liquide de cuve (oxygène) de la colonne 6 au moyen d'un vaporiseur condenseur 7.

La colonne 6 reçoit, à des niveaux croissants, trois liquides détendus prélevés respectivement à la base, à un niveau intermédiaire et au sommet de la colonne 5, à savoir du "liquide riche" LR (air enrichi en oxygène), du "liquide pauvre inférieur" LP1 (azote impur) et du "liquide pauvre supérieur" LP2 (azote pratiquement pur). Un gaz résiduaire W (azote impur) est soutiré de la colonne 6 au niveau d'injection du liquide pauvre inférieur, et l'azote de production est soutiré au sommet du minaret 8, qui constitue la partie d'extrémité supérieure de la colonne 6.

Un gaz est prélevé de la colonne BP 6, à un niveau inférieur à l'injection de liquide riche, via une conduite 9 dite "piquage argon", et est introduit à la base de la colonne argon 2. Le liquide de cuve de cette colonne 2 est renvoyé au même niveau de la colonne 6 via une conduite de retour 10. La colonne 2 comporte un condenseur de tête 11 refroidi par du liquide riche détendu, et produit en tête, via une conduite 12, de l'argon impur. Le liquide riche vaporisé dans le condenseur 11 est renvoyé dans la colonne 6.

La colonne 2 comporte au moins 80 plateaux théoriques, typiquement entre 80 et 110 plateaux théoriques environ, de sorte qu'il est avantageux, pour des questions de perte de charge, de l'équiper d'un garnissage, notamment d'un garnissage organisé, avantageusement un garnissage ondulé-croisé, tel que décrit dans le document WO-A-89/10527. L'argon impur contient ainsi environ 97 % d'argon, 3 % d'azote et moins de 1000 vpm (parties par million en phase vapeur) d'oxygène, typiquement entre environ 100 et 1000 vpm selon le nombre de plateaux théoriques,

L'appareil 3 comprend successivement un échangeur de chaleur à contre-courant 13, un compresseur 14, un refroidisseur à eau 15, une source 16 d'hydrogène sous une pression typiquement d'environ $6 \times 10^5$ Pa, et d'au moins deux bouteilles 17 montées en parallèle. Chacune de ces bouteilles contient deux lits disposés en série, l'un au-dessus de l'autre, à savoir, dans sa partie inférieure, un premier lit 18 d'un catalyseur qui sera précisé plus loin et, dans sa partie supérieure, un second lit 19 d'un adsorbant de l'eau tel que l'alumine.

L'argon impur véhiculé par la conduite 12 est réchauffé jusqu'à environ + 30°C dans l'échangeur 13, comprimé à environ $6 \times 10^5$ Pa en 14, refroidi à environ + 15°C en 15, mélangé à un courant d'hydrogène sous environ $6 \times 10^5$ Pa fourni par la source 16, et introduit à la base d'une des deux bouteilles 17. L'hydrogène est en excès par rapport à la stoechiométrie de la réaction 2H2 + 02 --> 2H20, et tout l'oxygène est ainsi converti en eau dans le lit 18. Le gaz issu de ce lit, contenant uniquement de l'argon, de l'azote, de l'hydrogène et de l'eau, est desséché et partiellement épuré dans le lit 19, et ressort de la bouteille 17 réchauffé d'environ 20°C, soit à environ + 35°C. Ce gaz est ensuite refroidi dans l'échangeur 13 à contre-courant de l'argon impur, condensé dans un condenseur de cuve 20 de la colonne 4, détendu à environ $1,8 \times 10^5$ Pa dans une vanne de détente 21 et injecté à un niveau intermédiaire dans la colonne 4. Cette dernière comporte en tête un condenseur 22 refroidi par du liquide pauvre inférieur détendu, lequel est, après vaporisation, renvoyé dans la colonne 6, et elle produit d'une part, en cuve, de l'argon liquide ayant une pureté très élevée en oxygène et en hydrogène, pouvant atteindre l'ordre du ppb (partie par billion selon la terminologie anglo-saxonne, soit $10^{-3}$ ppm) pour l'ensemble de ces deux éléments. La colonne 4 produit également en tête, via une conduite 23, un gaz résiduaire constitué d'azote et d'hydrogène.

Pendant qu'une bouteille 17 travaille en conversion/ dessiccation, l'autre (notamment son lit 19) est régénérée. Cette régénération s'effectue au moyen d'une montée en température et/ou -d'un abaissement de pression, le cas échéant en-dessous de la pression atmosphérique, et/ou d'un balayage d'élution par le gaz à épurer ou épuré, ou par un gaz provenant de la colonne de distillation, notamment de l'azote de production de la double colonne.

Le catalyseur des lits 18 est formé de particules d'au moins un métal de la famille du platine, c'est-à-dire du groupe VIII de la classification périodique des éléments, groupe constitué par le ruthénium (Ru), le rhodium (Rh), le palladium (Pd), l'osmium (Os), l'iridium (Ir) et le platine (Pt), supporté par un support particulaire à forte surface spécifique constitué avantageusement par une zéolithe, de l'alumine ou de la silice.

L'opération de mise en support de l'élément métallique s'effectue selon des techniques, connues en elles-mêmes, de l'échange d'ions et/ou d'imprégnation.

Le procédé décrit ci-dessus permet d'éviter tout risque d'échauffement excessif des bouteilles d'épuration 17, et ne nécessite aucun dispositif de refroidissement à agent frigorigène extérieur entre les lits 18 et 19, qui peuvent ainsi être avantageusement superposés dans une même bouteille.

En variante, l'hydrogène peut être remplacé par du monoxyde de carbone (CO), auquel cas l'oxygène est converti en dioxyde de carbone $CO_2$ dans le lit 18 et le $CO_2$ est éliminé par adsorption dans le lit 19, ce dernier étant bien entendu constitué par un adsorbant approprié tel qu'un tamis moléculaire. L'excès de CO est éliminé avec l'azote dans la colonne 4.

**Revendications**

1. Procédé de production d'argon par distillation d'air dans une double colonne (1) couplée à une colonne (2) de production d'argon impur, élimination, par conversion catalytique (en 18) en présence d'un agent réducteur en excès, de l'oxygène contenu dans l'argon impur, élimination par adsorption (en 19) du produit de cette conversion, puis élimination par distillation (en 4) de l'excès d'agent réducteur et de l'azote du gaz restant, caractérisé en ce qu'on produit par distillation de l'argon impur ayant une teneur en oxygène inférieure à 1000 vpm, et en ce que la conversion catalytique est réalisée, à une température voisine de la température ambiante, en faisant passer l'argon impur et l'agent réducteur en excès dans un lit catalytique (18) constitué de particules d'au moins un métal de la famille du platine supportées par un support particulaire à forte surface spécifique.

2. Procédé selon la revendication 1, caractérisé en ce que l'argon impur a une teneur en oxygène comprise entre 100 et 1000 vpm environ.

3. Procédé selon la revendication 1, caractérisé en ce que le support particulaire est une zéolithe et/ou de l'alumine et/ou de la silice.

4. Procédé selon la revendication 2, caractérisé en ce qu'on régénère le catalyseur au moyen d'une montée en température et/ou d'un abaissement de pression, le cas échéant en dessous de la pression atmosphérique, et/ou d'un balayage d'élution par le gaz à épurer ou épuré ou par un gaz provenant de la colonne de distillation, notamment de l'azote de production de la double colonne.

5. Procédé selon l'une des revendications 1 à 4, caractérisé en ce que l'agent réducteur est l'hydrogène ou le monoxyde de carbone.

6. Installation de production d'argon, du type comprenant une double colonne (1) de distillation d'air couplée à une colonne (2) de production d'argon impur par distillation, un compresseur d'argon impur (14) refoulant dans un appareil (17) de conversion catalytique de l'oxygène, des moyens (19) d'élimination des produits de la conversion, et une colonne (4) de déazotation, caractérisée en ce que la colonne (2) de production d'argon impur comporte au moins 80 plateaux théoriques, et en ce que l'appareil de conversion catalytique (17) comprend un lit catalytique (18) constitué de particules d'au moins un métal de la famille du platine supportées par un support particulaire à forte surface spécifique et est mis en oeuvre au voisinage de la température ambiante.

7. Installation selon la revendication 6, caractérisée en ce que la colonne (2) de production d'argon impur comporte entre environ 80 et 110 plateaux théoriques.

8. Installation selon la revendication 6, caractérisée en ce que le support particulaire est une zéolithe et/ou de l'alumine. et/ou de la silice.

9. Installation selon l'une des revendications 6 à 8, caractérisée en ce qu'elle comprend un échangeur de chaleur (13) mettant en relation d'échange thermique à contre-courant l'argon impur provenant de la colonne (2) de production d'argon impur et le gaz issu desdits moyens d'élimination (19).

10. Installation selon l'une des revendications 6 à 9, caractérisée en ce que l'entrée de l'appareil de conversion catalytique (17) est reliée à une source (16) d'hydrogène ou de monoxyde de carbone.

11. Installation suivant l'une des revendications 6 à 10, caractérisée en ce qu'il comprend au moins un lit catalytique (18) et un lit d'adsorbant constituant lesdits moyens d'élimination (19), disposés en superposition dans au moins un même conteneur (17).

Office européen
des brevets

# RAPPORT DE RECHERCHE EUROPEENNE

Numero de la demande

EP    92 40 0899

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 401 197 (BASF)<br>* résumé *<br>* page 2, ligne 1 - ligne 43 *<br>* page 3, ligne 4 - ligne 13 *<br>* page 3, ligne 26 - ligne 42 *<br>* figure * | 1,3,5 | F25J3/04<br>C01B23/00 |
| A | --- | 6,8,10 | |
| A | DE-A-3 806 523 (LINDE)<br>* résumé *<br>* colonne 2, ligne 18 - colonne 3, ligne 4 *<br>* figure * | 1,6,9,10 | |
| A | --- <br>CHEMICAL ABSTRACTS, vol. 110, no. 10,<br>15 Mai 1989, Columbus, Ohio, US;<br>abstract no. 176069H, 'ARGON REFINING USING<br>ARGON AND HYDROGEN IN WASTE GASES FROM<br>ARGON-REFINING COLUMN'<br>page 166 ;<br>& JP-A 63 267 878 (HITACHI et al.)<br>* abrégé * | 1,5,6,9,<br>10 | |

DOMAINES TECHNIQUES
RECHERCHES (Int. Cl.5)

F25J
C01B

Le présent rapport a été établi pour toutes les revendications

| Lieu de la recherche | Date d'achèvement de la recherche | Examinateur |
|---|---|---|
| LA HAYE | 21 JUILLET 1992 | SIEM T.D. |